# FASCICULE DE BREVET EUROPEEN

(11) **EP 0 629 525 B1**
(45) Date de publication et mention de la délivrance du brevet: **04.12.1996**
(21) Numéro de dépôt: 94401249.1
(22) Date de dépôt: 07.06.1994
(51) Int. Cl.: B60R 11/02, B60J 3/02

(54) **Pare-soleil de véhicule automobile et autres engins**
Sonnenblende für Kraftfahrzeug und andere Fahrzeuge
Sun visor for motor vehicle and other vehicles

(30) Priorité: 18.06.1993 FR 9307364
(43) Date de publication de la demande: 21.12.1994
(73) Titulaire: Société Anonyme dite: REGIE NATIONALE DES USINES RENAULT, 92109 Boulogne Billancourt (FR)
(72) Inventeur: Daulee, Lionel, F-78180 Montigny-le-Bretonneux (FR)

(56) Documents cités:
- DE-A- 3 009 483
- GB-A- 2 210 233
- GB-A- 2 235 851
- US-A- 4 169 218

## Description

L'invention concerne un pare-soleil de véhicule automobile et autres engins monté à articulation par l'un de ses bords longitudinaux autour d'un axe dont une extrémité est articulée sur un élément de carrosserie du véhicule et équipé d'un microphone articulé sur un autre bord du pare-

soleil. Un tel dispositif et déjà connu, par exemple, dans le document GB-A-2 235 851.

La publication FR-A-2 612 717 décrit un montage coulissant de microphone le long d'une ceinture de sécurité qui permit un réglage latéral de la distance entre le microphone et la bouche du conducteur.

On connaît également des microphones d'équipements téléphoniques fixés sur le tableau de bord du véhicule à une distance constante de la tête supposée fixe du conducteur.

Ce montage diminue la qualité du son transmis et demeure sensible aux bruits parasites de la planche de bord et aux vibrations du moteur sans favoriser une réception correcte du son émis par l'utilisateur.

L'invention a pour objet un pare-soleil équipé d'un microphone articulé sur ce dernier dans le but de permettre à la fois un réglage de la distance entre ledit microphone et la tête du conducteur, un réglage de la hauteur dudit microphone et un positionnement de ce dernier face à la tête du conducteur.

Cette disposition permet ainsi d'améliorer la qualité du son transmis en rapprochant le microphone de la bouche de l'utilisateur et en réduisant l'incidence du bruit de fond du véhicule par rapport audit son transmis.

Selon l'invention, un autre bord du pare-soleil possède un décrochement dont l'une des extrémités porte une rotule de fixation et d'articulation d'un support de microphone dont le microphone est relié à l'extrémité d'un câble d'alimentation qui s'étend sur toute la longueur du décrochement.

L'invention apparaîtra à la lecture de la description d'un exemple de réalisation du pare-soleil en référence au dessin annexé dans lequel :
- la figure 1 est une représentation perspective éclatée du pare-soleil,
- la figure 2 est une coupe axiale du détail II du tube assemblé porteur du microphone de la figure 1,
- la figure 3 est une coupe radiale du tube assemblé porteur du microphone selon la flèche III de la figure 1,
- la figure 4 est une coupe radiale du tube assemblé porteur du microphone selon la flèche IV de la figure 1,
- la figure 5 est une coupe radiale du tube assemblé porteur du microphone selon la flèche V de la figure 1.
- la figure 6 est une représentation perspective d'une variante de réalisation de l'invention.

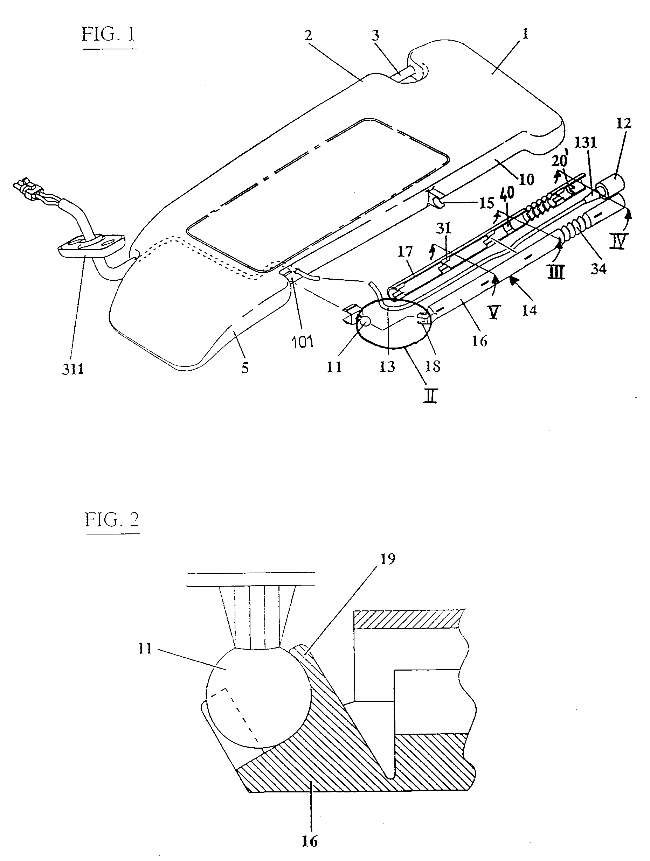

Selon la figure 1, le pare-soleil 1 est monté à articulation par l'un de ses bords longitudinaux 2 autour d'un axe 3 dont une extrémité 311 est fixée sur un élément de carrosserie du véhicule non représenté.

Dans la suite de la description, les parties identiques ou équivalentes des pare-soleils illustrés sur les figures porteront les mêmes numéros de référence.

Le bord longitudinal 5 du pare-soleil 1 opposé au bord porteur 2 de l'axe d'articulation 3 possède un décrochement 10.

Une extrémité 101 du décrochement 10 porte une rotule 11 de fixation et d'articulation d'un support de microphone 12 dont le microphone 12 est relié à l'extrémité 131 d'un câble d'alimentation 13 qui s'étend sur toute la longueur du décrochement 10.

Le microphone 12 et son câble d'alimentation 13 sont montés dans le support constitué par un tube 14 et fixé le long du décrochement 10 par un organe de fixation 15, tel qu'un clip, porté par ledit décrochement 10.

Le tube 14 porteur du câble d'alimentation 13 est constitué par deux parties assemblées 16 et 17.

La partie 16 du tube 14 porte un logement 18 de réception de la rotule 11 et des doigts élastiques de retenue 19 de cette dernière dans ledit logement 18 tout en permettant son articulation, comme le montre la figure 2.

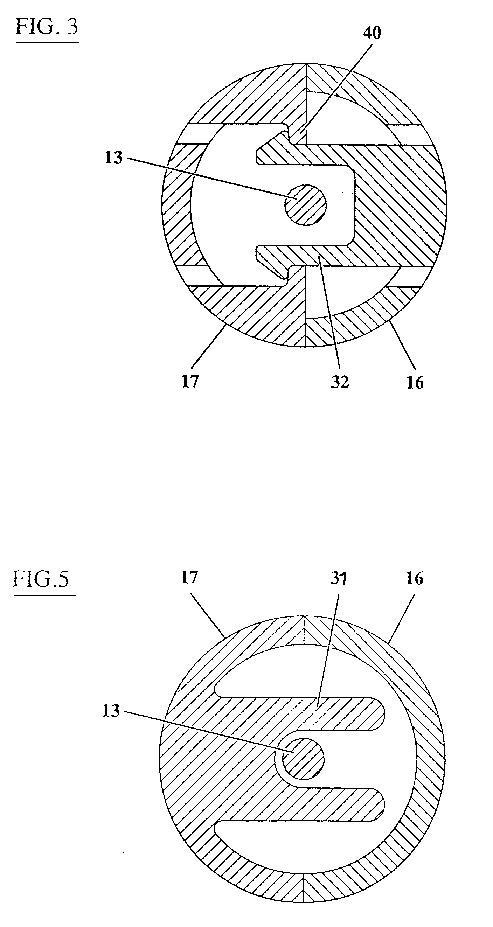

La partie 16 du tube-support porte également des éléments de retenue 32 de la partie 17 du tube 14 en appui sur des éléments de réception 40 portés par ladite partie 17, représentés à la figure 3.

La partie 17 du tube 14 porte des éléments de retenue 31 du câble, tels que des fourchettes, espacées longitudinalement et destinées à la rétention du câble sur la partie 17 dudit tube 14, représentés à la figure 5.

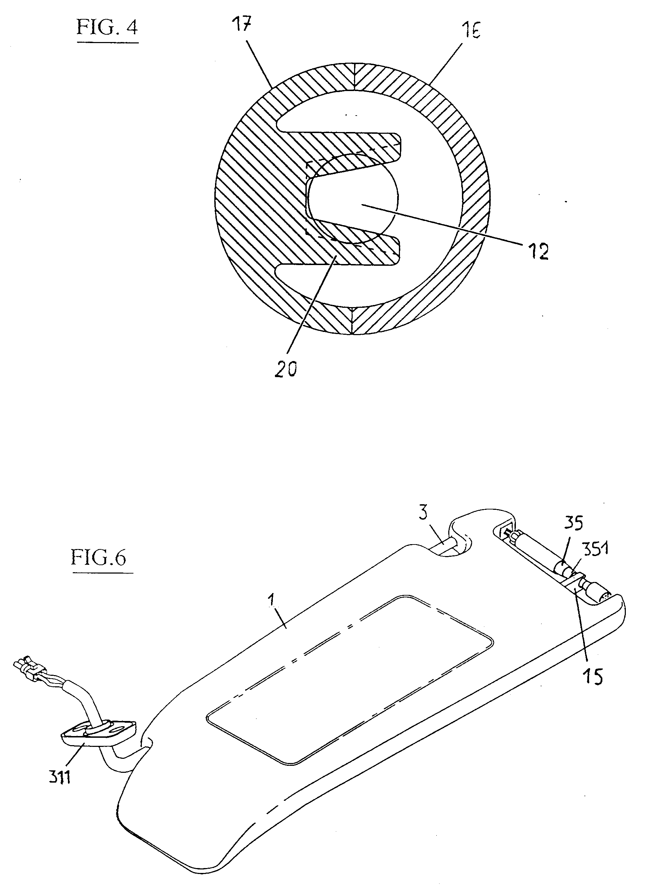

La partie 17 porte également des éléments de retenue 20 du microphone 12, tels que des fourchettes représentées à la figure 4.
De la même façon, la partie 16 du tube 14 porte des éléments de retenue du microphone identiques à ceux portés par la partie 17, non représentés sur les figures.

La paroi du tube 14 possède des ondulations longitudinales localisées dans une zone de flexion 34 de ladite paroi.
Cette zone de flexion permet d'orienter l'extrémité du tube-support portant le microphone dans le but d'obtenir un meilleur positionnement du microphone 12 par rapport à la tête du conducteur.

Selon une variante de réalisation de l'invention représentée à la figure 6, le tube 14 porteur du câble d'alimentation 13 est constitué d'une pluralité de tronçons tubulaires creux télescopiques 35.

Le tronçon d'extrémité 351 du tube 14 est solidaire des éléments de retenue non représentés du microphone 12.

## Revendications

1. Pare-soleil (1) de véhicule automobile et autres engins monté à articulation par l'un de ses bords longitudinaux (2) autour d'un axe (3) dont une extrémité (311) est articulée sur un élément de carrosserie du véhicule et équipé d'un microphone articulé par un support (14) sur un autre bord du pare-soleil, caractérisé par le fait que ledit autre bord (5) du pare-soleil (1), possède un décrochement (10) dont l'une des extrémités (101) porte une rotule de fixation et d'articulation (11) dudit support (14) de microphone (12) ledit microphone (12) étant relié à l'extrémité (131) d'un câble d'alimentation (13) qui s'étend sur toute la longueur du décrochement (10).

2. Pare-soleil selon la revendication 1, caractérisé par le fait que le microphone (12) et son câble d'alimentation (13) sont montés dans le support constitué par un tube (14) et que le décrochement (10) du pare-soleil (1) porte un organe de fixation (15) dudit tube (14) le long du décrochement (10).

3. Pare-soleil selon l'une quelconque des revendications 1 ou 2, caractérisé par le fait que le décrochement (10) est porté par le bord longitudinal (5) opposé au bord porteur (2) de l'axe d'articulation (3).

4. Pare-soleil selon la revendication 3, caractérisé par le fait que le tube (14) porteur du câble d'alimentation (13) est constitué par deux parties assemblées (16, 17) dont une partie (16) porte un logement de réception (18) de la rotule de fixation (11), des éléments de retenue du microphone (12) et des éléments de retenue (32) additionnels de l'autre partie (16) du tube (14), et dont l'autre partie (17) porte des éléments de retenue (31) du câble (13) espacés longitudinalement ainsi que des éléments de retenue (20) du microphone (12).

5. Pare-soleil selon l'une quelconque des revendications 3 ou 4, caractérisé par le fait que la paroi du tube (14) possède des ondulations longitudinales localisées dans une zone de flexion (34) de ladite paroi.

6. Pare-soleil selon la revendication 1, caractérisé par le fait que le tube (14) du câble d'alimentation (13) est constitué d'une pluralité de tronçons tubulaires creux télescopiques (35).

7. Pare-soleil selon la revendication 6, caractérisé par le fait que le tronçon d'extrémité (351) du tube (14) est solidaire des éléments retenue du microphone (12).

## Claims

1. Sun visor (1) for an automotive vehicle and other vehicles, mounted for articulation by one of its longitudinal edges (2) about an axle (3), one extremity (311) of which is joined to an element of bodywork of the vehicle, and equipped with a microphone joined by means of a support (14) on another edge of the sun visor, characterised by the fact that said other edge (5) of the sun visor (1) has a recessed portion, one of the extremities (101) of which carries a fixing and articulating ball joint (11) for said support (14) for a microphone (12), said microphone (12) being connected at its extremity (131) to a supply cable (13) which extends along the whole length of the recessed portion (10).

2. Sun visor according to claim 1, characterised by the fact that the microphone (12) and its supply cable (13) are mounted in the support formed by a tube (14) and that the recessed portion (10) in the sun visor (1) carries a fixing member (15) for said tube (14) along the recessed portion (10).

3. Sun visor according to any one of preceding claims 1 or 2, characterised by the fact that the recessed portion (10) is on the longitudinal edge (5) opposite the edge (2) carrying the articulating axle (3).

4. Sun visor according to claim 3, characterised by the fact that the tube (14) carrying the supply cable (13) is composed of two assembled parts (16, 17), one (16) of which carries a housing (18) for receiving the fixing ball joint (11), retaining elements for the microphone (12) and additional retaining elements (32) belonging to the other part (16) of the tube (14), and the other part of which (17) carries longitudinally spaced retaining elements (31) for the cable (13) as well as retaining elements (20) for the microphone (12).

5. Sun visor according to any one of claims 3 or 4, characterised by the fact that the wall of the tube (14) has longitudinal corrugations situated in a flexible zone (34) of said wall.

6. Sun visor according to claim 1, characterised by the fact that the tube (14) of the supply cable (13) is constituted by a plurality of hollow, telescopic, tubular sections (35).

7. Sun visor according to claim 6, characterised by the fact that the end section (351) of the tube (14) is integral with the retaining elements for the microphone (12).

## Patentansprüche

1. Sonnenblende (1) für Kraftfahrzeuge und andere Fahrzeuge, die mit einem ihrer Längsränder (2) gelenkig an einer Achse (3) angeordnet ist, deren eines Ende (311) an einem Kraftfahrzeugkarosserieteil angelenkt ist und die mit einem Mikrofon versehen ist, welches über eine Halterung (14) an einem anderen Rand der Sonnenblende angelenkt ist, dadurch gekennzeichnet, daß dieser andere Rand (5) der Sonnenblende (1) eine Aussparung (10) aufweist, deren eines Ende (101) ein Gelenk (11) zur Befestigung und Anlenkung der Halterung (14) für das Mikrofon (12) trägt und daß das Mikrofon (12) mit dem Ende (131) eines Versorgungskabels (13) verbunden ist, welches sich über die gesamte Länge der Aussparung (10) erstreckt.

2. Sonnenblende nach Anspruch 1, dadurch gekennzeichnet, daß das Mikrofon (12) und sein Versorgungskabel (13) in der Halterung angeordnet sind, welche durch ein Rohr (14) gebildet wird und daß die Aussparung (10) der Sonnenblende (1) ein Befestigungsteil (15) für das Rohr (14) entlang der Aussparung (10) trägt.

3. Sonnenblende nach einem der Ansprüche 1 oder 2, dadurch gekennzeichnet, daß die Aussparung (10) an dem dem Aufnahmerand (2) für die Gelenkachse (3) gegenüberliegenden Längsrand (5) vorgesehen ist.

4. Sonnenblende nach Anspruch 3, dadurch gekennzeichnet, daß das Tragrohr (14) für das Versorgungskabel (13) aus zwei zusammengefügten Teilen (16, 17) besteht, wobei ein Teil (16) eine Aufnahmeöffnung (18) für das Befestigungsgelenk (11) trägt sowie Halteteile für das Mikrofon (12) und zusätzliche Halteteile (32) für das andere Teil (16) des Rohrs (14) und daß der andere Teil (17) Halteteile (31) für das Kabel (13) trägt, die im Abstand voneinander in Längsrichtung vorgesehen sind sowie Halteteile (20) für das Mikrofon (12).

5. Sonnenblende nach einem der Ansprüche 3 oder 4, dadurch gekennzeichnet, daß die Wand des Rohrs (14) in Längsrichtung an einer Biegestelle (34) der Wand gewellt ist.

6. Sonnenblende nach Anspruch 1, dadurch gekennzeichnet, daß das Rohr (14) für das Versorgungskabel (13) aus einer Vielzahl von teleskopartigen, hohlen Rohrabschnitten (35) besteht.

7. Sonnenblende nach Anspruch 6, dadurch gekennzeichnet, daß der Endabschnitt (351) des Rohrs (14) fest mit den Halteteilen für das Mikrofon (12) verbunden ist.
